# EUROPEAN PATENT APPLICATION

(11) **EP 4 190 840 A1**
(43) Date of publication of application: **07.06.2023**
(21) Application number: 21849554.7
(22) Date of filing: 21.07.2021
(51) Int. Cl.: C08J 3/12, C08J 3/20, C08L 1/02, C08L 23/00, C08L 23/10, C08L 67/02, C08L 67/04, C08L 101/00, C08L 101/16

(54) **RESIN MATERIAL FOR MOLDING AND METHOD FOR PRODUCING SAME**

(30) Priority: 31.07.2020 JP 2020130046; 22.02.2021 JP 2021026468
(71) Applicant: Nippon Paper Industries Co., Ltd., Tokyo 114-0002 (JP)
(72) Inventor: ONO, Hiroshi, Tokyo 114-0002 (JP); MATSUMOTO, Kei, Tokyo 114-0002 (JP); ISHINO, Yoichi, Tokyo 114-0002 (JP)
(74) Representative: Carpmaels & Ransford LLP
(86) International application number: PCT/JP2021/027297
(87) International publication number: WO 2022/024918

(57) **Abstract**

The subject of the present invention is to provide a resin material in which pulp and a thermoplastic resin are uniformly mixed, and which is easy to mold. Provided is a molding resin material comprising pulp having a 50% average particle size (D50) on a volume basis measured by a laser diffraction/scattering method of 100 µm or less, preferably 10 to 90% by mass of a pulverized product of hardwood chemical pulp, and further comprising a thermoplastic resin such as a polyolefin-based resin and a polylactic acid-based resin.

## Description

### TECHNICAL FIELD

The present invention relates to molding resin materials and methods for producing the same. In particular, the present invention relates to a pulverized product of hardwood chemical pulp and a thermoplastic molding material using a thermoplastic resin, typified by polypropylene and polylactic acid, as a raw material, and to a method for producing the same.

### BACKGROUND ART

Biomass materials are attracting attention as an industrial resource. A biomass material refers to a material derived from plants and other living organisms. Biomass materials are organic and emit carbon dioxide when burned. However, the carbon contained in the biomass materials is derived from the carbon dioxide that the biomass has absorbed from the atmosphere through photosynthesis during their growth. Accordingly, it can be considered that the use of biomass materials does not increase the amount of carbon dioxide in the ambient air as a whole. This nature is called carbon neutrality.

Against the background of global warming and other environmental problems, it is urgent to promote resource-saving, material recycling for using waste as raw materials, and the environmental recycling cycle typically for biodegradable plastics. In Japan, the Revised Recycling Law, the Green Purchasing Law, and so on have been developed, and products according to these laws are increasingly being demanded accordingly.

Under such circumstances, blending biomass materials into resin molded articles, which are widely used from automobile part materials to daily necessities, will promote the implementation of the carbon neutral philosophy. For example, PTL 1 discloses a composite material containing carboxymethylated cellulose nanofibers, a polymer compound having a primary amino group, an acid-modified polyolefin, and a polyolefin. PTL 2 discloses cellulosic composites containing wood pulp and a polymeric matrix. PTL 3 discloses a method for producing resin injection molded articles containing wood flour by mixing wood flour with random polypropylene resin and using an injection molding machine.

### CITATION LIST

### PATENT LITERATURE

PTL 1: International Publication WO 2014/087767
PTL 2: National Publication of International Patent Application No. 2019-512591
PTL 3: JP2010-138337A

### SUMMARY OF INVENTION

### TECHNICAL PROBLEM

However, when molding is performed by simply mixing "woody biomass" and "polypropylene" and heating and melting the mixture, there occur problems that woody biomass cannot be uniformly mixed with polypropylene because of the hydrophilicity of the woody biomass; that the resin mass is cut into small pieces at the outlet of the apparatus for injecting the mixture of woody biomass and polypropylene; that the surface of the resulting molded article is not smooth; and so on.

For example, PTL 1, which describes using carboxymethylated cellulose nanofibers, requires carboxymethylating cellulose and, further, adding a polymer compound having a primary amino group and an acid-modified polyolefin to improve the uniformity of dispersion into polyolefin resin. This results in increased costs.

Accordingly, the subject of the present invention relates to providing a woody biomass-mixed thermoplastic molding material, specifically, providing at low cost a molding material in which woody biomass and a thermoplastic resin are uniformly mixed and which is less likely to cut when molded by injection or the like.

### SOLUTION TO PROBLEM

The present inventors have found that a highly moldable molding resin material can be obtained by selecting a pulverized product of hardwood chemical pulp having a 50% average particle size (D50) on a volume basis measured by a laser diffraction/scattering method of 100 µm or less as the woody biomass, and then mixing the pulverized product with a thermoplastic resin, such as polypropylene or polyethylene, followed by heating and kneading, and thus have accomplished the present invention.

The present invention provides, but is not limited to, the following:
(1) A molding resin material comprising 10 to 90% by mass of a pulverized product of pulp having a 50% average particle size (D50) on a volume basis measured by a laser diffraction/scattering method of 100 µm or less, and further comprising a thermoplastic resin.
(2) The molding resin material according to (1), wherein the pulp is hardwood chemical pulp.
(3) The molding resin material according to (1) or (2), wherein the thermoplastic resin includes a polyolefin-based resin.
(4) The molding resin material according to any one of (1) to (3), wherein the thermoplastic resin includes a polypropylene-based resin.
(5) The molding resin material according to any one of (1) to (4), wherein the thermoplastic resin includes a biodegradable resin.
(6) The molding resin material according to (5), wherein the thermoplastic resin includes a polylactic acid-based resin.
(7) The molding resin material according to (5) or (6), wherein the thermoplastic resin includes a polybutylene succinate-based resin.
(8) The molding resin material according to any one of (1) to (7) comprising 5 to 15% by mass of a compatibilizing resin.
(9) The molding resin material according to any one of (2) to (8), wherein the hardwood chemical pulp is chemical pulp using a Eucalyptus raw material.
(10) The molding resin material according to any one of (2) to (9), wherein the hardwood chemical pulp has a fiber width of 10 to 25 µm and a wall thickness of 3.0 to 7.0 µm.
(11) A method for producing a pulp pulverized product for a molding resin material, the method comprising a pulverization step of pulverizing pulp to obtain a pulverized product having a 50% average particle size (D50) on a volume basis measured by a laser diffraction/scattering method of 100 µm or less.
(12) The method for producing a pulp pulverized product for a molding resin material according to (11), wherein the pulp is hardwood chemical pulp.

### ADVANTAGEOUS EFFECTS OF INVENTION

The present invention enables consistent production of a molding resin material containing a pulverized product of hardwood chemical pulp. Also, by increasing the proportion of hardwood chemical pulp, a molding resin material superior in terms of carbon neutrality can be produced.

### DESCRIPTION OF EMBODIMENTS

A pulp pulverized product used in the present invention is obtained by subjecting a cellulose raw material such as pulp subjected to acid hydrolysis treatment with a mineral acid such as a hydrochloric acid, a sulfuric acid, and a nitric acid (that is, an inorganic acid) to pulverization treatment, or obtained by mechanically pulverizing a cellulose raw material such as non-treated pulp that is not subjected to acid hydrolysis treatment.

The molding resin material of the present invention contains 20 to 90% by mass of a pulverized product of pulp having a 50% average particle size (D50) on a volume basis measured by a laser diffraction/scattering method of 100 µm or less, and further contains a thermoplastic resin.

In the present invention, the pulp used as the raw material is preferably pulp derived from wood. Examples of the pulp derived from wood include pulp derived from hardwood and pulp derived from softwood, and in particular, chemical pulp derived from hardwood is preferable. Examples of the pulping method of chemical pulp derived from these woods include, but are not particularly limited to, a sulfite pulping method, a kraft pulping method, a soda quinone pulping method, and an organosolv pulping method. Among these, a sulfite pulping method or a kraft pulping method is preferable. Examples of the chemical pulp include kraft pulp (KP), dissolving kraft pulp (DKP), sulfite pulp (SP), and dissolving kraft pulp (DSP). Either unbleached chemical pulp or bleached chemical pulp may be used as the chemical pulp. Also, mechanical pulp such as groundwood pulp (GP), refiner groundwood pulp (RGP), thermo mechanical pulp (TMP), and chemi-thermo mechanical pulp (CTMP) can be used.

As the hardwood chemical pulp, hardwood kraft pulp, hardwood dissolving kraft pulp, hardwood sulfite pulp, hardwood soda pulp, or the like can be used, and hardwood kraft pulp or hardwood dissolving kraft pulp is preferably used.

Examples of the raw material of hardwood chemical pulp include Eucalyptus, Para rubber tree, Japanese Beech, Japanese Lime, White Birch, poplar, acacia, oak, Acer mono, Kalopanax, Ulmus, Empress tree, Japanese Bigleaf Magnolia, Willow, Kalopanax, Quercus phillyraeoides, Quercus serrata, Sawtooth Oak, Aesculus turbinata, Japanese zelkova, Japanese Cherry Birch, giant dogwood, and Fraxinus lanuginose.

Among these, Eucalyptus is preferable. Examples of Eucalyptus include Eucalyptus (hereinafter abbreviated as E.) calophylla, E. citriodora, E. diversicolor, E. globulus, E. grandis, E. urograndis, E. gummifera, E. marginata, E. nesophila, E. nitens, E. amygdalina, E. camaldulensis, E. delegatensis, E. gigantea, E. muelleriana, E. obliqua, E. regnans, E. sieberiana, E. viminalis, and E. marginata.

As for the hardwood kraft pulp, any of unbleached kraft pulp, oxygen delignification kraft pulp, and bleached kraft pulp can be used, and bleached kraft pulp is preferable since pulverization is further easily performed.

Hardwood chemical pulp preferably has a fiber width of 10 to 25 µm and a wall thickness of 3.0 to 7.0 µm.

Hereinafter, the method for producing the pulverized product (powdery cellulose) of a pulp raw material subjected to acid hydrolysis treatment of the present invention will be exemplified.

The powdery cellulose is produced through a raw material pulp slurry preparation step, an acid hydrolysis reaction step, a neutralization, washing, and dehydration step, a drying step, a pulverization step, and a classification step.

More specifically, the steps are as follows. The raw material pulp slurry preparation step is a step of preparing a raw material pulp slurry by using a cellulose raw material. The acid hydrolysis reaction step is a step of subjecting the raw material pulp slurry to hydrolysis at an acid concentration of 0.10 to 1.0 N to prepare a hydrolysate. The neutralization, washing, and dehydration step is a step of neutralizing, washing, and then dehydrating the hydrolysate. The drying step is a step of drying the dehydrated hydrolysate to obtain a dried material. The classification step is a step of pulverizing the dried material to obtain a pulverized product. The cellulose powder of the present invention can be produced through such steps.

The pulp that can be used in the method for producing the powdery cellulose of the present invention may be in a flow state or a sheet form. When fluid pulp obtained from a pulp bleaching process is used as the raw material, the concentration thereof is required to be increased before the fluid pulp is fed into a hydrolysis reaction tank, and thus, a predetermined amount of the fluid pulp is fed into a reaction tank after being concentrated by a dewatering machine such as a screw press and a belt filter. When a dry sheet of pulp is used as the raw material, the pulp is disentangled by a disintegrator such as a roll crusher and then fed into a reaction tank.

Then, a dispersion liquid having a pulp concentration of 3 to 10 wt% that is adjusted to have an acid concentration of 0.1 to 30 wt% (in terms of solid matter content) is subjected to acid hydrolysis treatment under conditions of a reaction temperature of 80 to 100°C and a reaction time of 30 minutes to 3 hours. The pulp subjected to hydrolysis treatment is neutralized by the addition of an alkali agent, followed by washing. Thereafter, the mixture is solid-liquid separated into the pulp subjected to hydrolysis treatment in the dehydration step and waste acid. The pulp subjected to hydrolysis treatment is dried by a dryer, and mechanically pulverized and classified into a defined size by a pulverizer. The pulp may be dewatered after neutralization, washing, and dehydration and before drying to adjust the solid content concentration. By adjusting the solid content concentration before drying, values of the physical properties of the powdery cellulose are easily controlled.

Examples of the pulverizer used in the method for producing the powdery cellulose of the present invention are as follows.

Cutting mills: mesh mills (manufactured by Horai Co., Ltd.), ATOMZ (manufactured by Yamamoto Hyakuma K.K.), knife mills (manufactured by PALLMANN), cutter mills (manufactured by TOKYO ATOMIZER M.F.G. CO.,LTD.), CS cutters (manufactured by Mitsui Mining Co., Ltd.), rotary cutter mills (manufactured by NARA MACHINERY CO., LTD.), turbo cutters (manufactured by FREUND CORPORATION), pulp crushers (manufactured by ZUIKO Corporation), shredders (manufactured by Shinko Pantec Co.,Ltd.), and the like.

Hammer mills: Jaw crusher (manufactured by Makino Corporation) and Hammer crusher (manufactured by MAKINO MFG.CO.,LTD.).

Impact mills: Pulverizer (manufactured by Hosokawa Micron Corporation), Fine Impact Mill (manufactured by Hosokawa Micron Corporation), Super Micron Mill (manufactured by Hosokawa Micron Corporation), INNOMIZER (manufactured by Hosokawa Micron Corporation), FINE MILL (manufactured by Nippon Pneumatic Mfg.Co.,Ltd.), CUM Centrifugal Mill (manufactured by Mitsui Mining Co., Ltd.), Exceed mill (manufactured by MAKINO MFG.CO.,LTD.), Ultraplex (manufactured by MAKINO MFG.CO.,LTD.), Contraplex (manufactured by MAKINO MFG.CO.,LTD.), Kolloplex (manufactured by MAKINO MFG.CO.,LTD.), Sample mill (manufactured by Seishin Enterprise Co., Ltd.), Bantam mill (manufactured by Seishin Enterprise Co., Ltd.), Atomizer (manufactured by Seishin Enterprise Co., Ltd.), Tornado mill (manufactured by NIKKISO CO., LTD.), Neamill (manufactured by DALTON CORPORATION), HT type fine pulverizer (manufactured by Horai Co., Ltd.), Jiyu Mill (manufactured by NARA MACHINERY CO., LTD.), New Cosmomizer (manufactured by NARA MACHINERY CO., LTD.), Turbo Mill (manufactured by FREUND CORPORATION), gather mills (manufactured by NISHIMURA MACHINE WORKS CO.,LTD.), Super Powder Mill (manufactured by NISHIMURA MACHINE WORKS CO.,LTD.), Blade mill (manufactured by NISSHIN ENGINEERING INC.), Super Rotor (manufactured by NISSHIN ENGINEERING INC.), Npa crusher (manufactured by Sansho Industry Co., Ltd.), Wiley pulverizer (manufactured by SANKI MFG., INC.), pulp pulverizers (manufactured by ZUIKO Corporation), Jacobson fine pulverizer (manufactured by Shinko Pantec Co.,Ltd.), and Universal mill (manufactured by TOKUJU CORPORATION).

Jet mills: CGS type jet mill (manufactured by Mitsui Mining Co., Ltd.), Micron Jet (manufactured by Hosokawa Micron Corporation), Counter Jet Mill (manufactured by Hosokawa Micron Corporation), Cross Jet Mill (manufactured by KURIMOTO, LTD.), SUPERSONIC JET MILL (manufactured by Nippon Pneumatic Mfg.Co.,Ltd.), Current Jet (manufactured by NISSHIN ENGINEERING INC.), jet mills (manufactured by Sansho Industry Co., Ltd.), Ebara Jet Micronizer (manufactured by Ebara Corporation), Ebara Triad Jet (manufactured by Ebara Corporation), Ceren Miller (manufactured by MASUKO SANGYO CO.,LTD.), New Micro Sictomat (manufactured by Masuno Seisakusho Ltd.), and KRYPTRON (manufactured by Kawasaki Heavy Industries, Ltd.).

Vertical roller mills: vertical roller mills (manufactured by Scenion Inc), vertical roller mills (manufactured by Schaeffler Japan Co., Ltd.), roller mills (manufactured by Kotobuki Engineering & Manufacturing Co.,Ltd.), VX Mill (KURIMOTO, LTD.), KVM Type Vertical Mill (EARTHTECHNICA Co., Ltd.), and IS Mill (manufactured by IHI Plant Services Corporation).

Among these, Jaw crusher (manufactured by Makino Corporation), Pulverizer (manufactured by Hosokawa Micron Corporation), Super Micron Mill (manufactured by Hosokawa Micron Corporation), Tornado mill (manufactured by NIKKISO CO., LTD.), Jiyu Mill (manufactured by NARA MACHINERY CO., LTD.), Turbo Mill (manufactured by FREUND CORPORATION), Super Powder Mill (manufactured by NISHIMURA MACHINE WORKS CO.,LTD.), Blade mill (manufactured by NISSHIN ENGINEERING INC.), SUPERSONIC JET MILL (manufactured by Nippon Pneumatic Mfg.Co.,Ltd.), and Current Jet (manufactured by NISSHIN ENGINEERING INC.), which are excellent in fine pulverization properties, are preferably used.

In the present invention, the pulp is pulverized into a pulverized product. The 50% average particle size (D50) on a volume basis of this pulverized product measured by a laser diffraction/scattering method is required to be set to 100 µm or less, and is further preferably 60 µm or less. The pulverized product of pulp having D50 of more than 100 µm is difficult to uniformly mix with the resin, and can cause problems that the resin mass is cut into small pieces at the outlet of the apparatus for injecting the mixture of the pulverized product and the resin, that transportation to the cooling device is difficult, and so on. The 50% average particle size (D50) on a volume basis measured by a laser diffraction/scattering method can be measured with a laser diffraction/scattering particle size analyzer (apparatus name: Mastersizer 2000, manufactured by Malvern) or the like.

The pulverizer used for pulverizing pulp can be an apparatus capable of pulverizing organic matter, and examples include, but are not limited to, turbo mills, ball mills, rod mills, bead mills, conical mills, disk mills, edge mills, hammer mills, mortars, pellet mills, VSI mills, wheel mills, roller mills, Jet mills, and mass colloiders. More specific examples thereof include Turbo Mill (manufactured by FREUND-TURBO CORPORATION), Tornado mill (manufactured by NIKKISO CO., LTD.), Blade mill (manufactured by NISSHIN ENGINEERING INC.), and Jiyu Mill (manufactured by NARA MACHINERY CO., LTD.).

In the present invention, the pulverization of pulp may be carried out in two stages. For example, the pulverized product of pulp is produced by a method including a first pulverization step of pulverizing pulp to obtain a pulverized product having a 50% average particle size (D50) on a volume basis measured by a laser diffraction/scattering method of 100 µm or less, and subsequently, a second pulverization step of further pulverizing the pulverized product obtained in the first pulverization step to obtain a pulverized product having a 50% average particle size (D50) on a volume basis measured by a laser diffraction/scattering method of 60 µm or less.

The molding resin material of the present invention can be obtained by heating and kneading the above-described pulverized product of pulp with a thermoplastic resin. A higher proportion of the pulverized product of pulp in the molding resin material is preferable to achieve a high level of carbon neutrality. In view of the resin material to be obtained and the manufacture and strength of molded articles, the proportion of the pulverized product of pulp is preferably 10% by mass or more and 90% by mass or less, more preferably 30% by mass or more and 80% by mass or less.

The thermoplastic resin used in the present invention is preferably formed into particles in view of handling but may be in any form. Two or more thermoplastic resins may be used at one time. The thermoplastic resins include biodegradable thermoplastic resins. From the viewpoint of enhancing the uniformity and adhesion in kneading with the torrefied product of the pulverized product of pulp, a compatibilizing resin (compatibilizer) that is a thermoplastic resin may be added.

Examples of the thermoplastic resin include, but are not limited to, polyethylene and polypropylene. Any other resin that can be plasticized by heat may be used. Polyethylene, such as LDPE (low-density polyethylene), and polypropylene are particularly preferable in view of moldability.

In the present invention, a biodegradable resin may be used as the thermoplastic resin. Examples of the biodegradable thermoplastic resin include, but are not limited to, polylactic acid (PLA), polybutylene succinate, polyethylene succinate, polyglycol, polycaprolactone, and polyvinyl alcohol.

The molding resin material of the present invention preferably contains a compatibilizing resin. By containing the compatibilizing resin, the strength is improved. Known compatibilizer may be used as the compatibilizing resin, and examples include, but are not limited to, maleic acid-modified polypropylene (UMEX 1010, produced by Sanyo Chemical Industries) and Modic (registered trademark) P908 (produced by Mitsubishi Chemical Corporation). The compatibilizing rein functions to increase the mixing uniformity and adhesion of the torrefied product with the thermoplastic resin. The compatibilizing resin is preferably used in an amount of 5 to 15% by mass in the molding resin material.

The molding resin material of the present invention can form molded products by heat treatment. The temperature for the heat treatment (treatment for heating, melting, kneading, and so on) of the molding resin material of the present invention is normally about 100°C to 300°C, preferably about 110°C to 250°, and particularly preferably about 120°C to 220°C. The molded product obtained by the heat treatment may be formed into a desired shape by known resin molded products.

In the method for producing the molding resin material of the present invention, an apparatus generally used for resin molding may be used for heating and kneading the pulverized product and a thermoplastic resin. For example, a conventional extruder may be used.

A variety of molded articles can be produced using the molding resin material of the present invention. Common methods used for molding a thermoplastic resin can be applied to the molding. Examples of such methods include, but are not limited to, injection molding, extrusion, blow molding, die molding, hollow molding, and foam molding.

The molding resin material of the present invention or the molded articles obtained by molding the molding resin material may contain organic matter and/or inorganic matter other than the thermoplastic resin and the torrefied product. Such other constituents include, for example, alkalis, such as sodium hydroxide, potassium hydroxide, magnesium hydroxide, and calcium hydroxide; inorganic fillers, such as clay, talc, calcium carbonate, mica, titanium dioxide, and zinc oxide; organic fillers, such as carbon black, graphite, and glass flakes; dyes or pigments, such as colcothar, azo pigments, and phthalocyanine; and modification additives, such as dispersants, lubricants, plasticizers, release agents, flame retardants, antioxidants (phenol-based antioxidants, phosphorus antioxidants, sulfur-based antioxidants), antistatic agents, light stabilizers, ultraviolet absorbent, metal inactivators, crystallization accelerators (nucleating agents), foaming agents, crosslinking agents, and antibacterial agents.

The molding resin material of the present invention may be molded according to various purposes, and are available as substitutes for plastic products. The molded article that can be obtained from the molding resin material of the present invention can be widely applied to, for example, trays or the like, automobile parts, automobile dashboards and other interiors, airplane luggage compartments, structural members of transportation equipment, enclosures (housings) of household appliances, electrical appliance components, cards, toner containers and various other containers, construction materials, seedling pots, agricultural sheets, writing instruments, wooden products, household utensils, straws, cups, toys, sporting goods, harbor components, construction components, power generator components, tools, fishing equipment, packaging materials, 3D printer-modeling products, pallets, and foods containers. These products will be disposed of when no longer needed. However, even though, for example, they are incinerated and emit carbon dioxide, the carbon dioxide derived from the pulverized product of pulp can be considered to be a portion that does not increase the amount of carbon dioxide in the ambient air.

### EXAMPLES

Although the present invention will be further described in detail with reference to Experimental Examples of the present invention, the present invention is not limited to the Experimental Examples. Note that "part(s)" and "%" represent part(s) by mass and % by mass, respectively, unless otherwise specified, and that the range of values includes the endpoints of the range.

### [Example 1]

A hardwood bleached kraft pulp using a wood chip of Eucalyptus camaldulensis eurofia hybrid as the raw material was pulverized by using a dry pulverizer (Turbo Mill T250, manufactured by FREUND-TURBO CORPORATION, blade: 14 × 4, clearance: 2 mm, circumferential speed: 108 m/s). The obtained pulverized product was further pulverized by using a dry pulverizer (Turbo Mill T400RS, manufactured by FREUND-TURBO CORPORATION, blade: 300 × 3, clearance: 1 mm, circumferential speed: 147 m/s).

Then, the obtained pulverized product of the hardwood bleached kraft pulp and polypropylene (trade name: J107G, manufactured by Prime Polymer, melt flow rate: 30 g/min) were mixed in a ratio of 50:50, kneaded in Xplore (manufactured by RheoLab Ltd.) at 190°C for 6 minutes, and molded at a heating cylinder temperature of 190°C and a die temperature of 40°C (9 bar 2 s - 11 bar 0.5 s - 11 bar 24 s) to produce a dumbbell. Thereafter, the physical properties thereof were measured.

### [Example 2]

A molding resin material was produced in the same manner as in Example 1, except that hardwood bleached kraft pulp using a wood chip of Eucalyptus Globulus as the raw material was used.

### [Example 3]

A molding resin material was produced in the same manner as in Example 1, except that hardwood bleached kraft pulp using a wood chip of maple as the raw material was used.

### [Example 4]

A molding resin material was produced in the same manner as in Example 1, except that hardwood bleached kraft pulp using a wood chip of Fagus crenata as the raw material was used.

### [Example 5]

A molding resin material was produced in the same manner as in Example 1, except that hardwood bleached kraft pulp using a wood chip of Aspen as the raw material was used.

### [Example 6]

A molding resin material was produced in the same manner as in Example 1, except that a pulverized product of bleached kraft pulp using a wood chip of Eucalyptus camaldulensis eurofia hybrid as the raw material, polypropylene (trade name: J107G, manufactured by Prime Polymer, melt flow rate: 30 g/min), and maleic acid-modified polypropylene (trade name: UMEX 1010, manufactured by Sanyo Chemical Industries) were mixed in a ratio of 50:40:10.

### [Comparative Example 1]

A molding resin material was produced in the same manner as in Example 1, except that softwood bleached kraft pulp using a wood chip of Larix kaempferi as the raw material was used.

### [Comparative Example 2]

A molding resin material was produced in the same manner as in Example 1, except that softwood bleached kraft pulp using a wood chip of Southern Yellow Pine as the raw material was used.

The following items were measured for each kraft pulp, pulverized product of kraft pulp, and molding resin material used in Examples and Comparative Examples, and the results are shown in Table 1.

### Measurement of Fiber and Wall Thickness of Kraft Pulp

The fiber and wall thickness of the kraft pulp was measured with Kajaani FiberLab (manufactured by Metso Automation).

### Measurement of 50% Average Particle Size (D50) on Volume Basis of Kraft Pulp Pulverized Product

The 50% average particle size (D50) on a volume basis of the kraft pulp pulverized products was measured using Mastersizer 3000 (manufactured by Malvern) by a wet method.

### Evaluation of Molding Resin Material

The melt flow rate (MFR) of the produced molding resin materials was measured in accordance with JIS K 7210. Specifically, the measurement was performed under conditions at a measurement temperature of 230°C and a test load of 2.16 kg using a melt flow indexer (G-20, manufactured by Toyo Seiki Seisaku-sho).

Also, by using the obtained molding resin materials as dumbbell-type test specimens (JIS K 7139), the tensile strength (maximum stress) was measured at a test speed of 1 mm/min and an initial inter-reference line distance of 30 mm using a precision universal tester ("AUTOGRAPH AG-Xplus" manufactured by SHIMADZU CORPORATION).

### [Table 1]

**Table 1**

| | Fiber width µm | Wall thickness µm | Turbo Mill T250 One-stage pulverization | | MFR | Maximum stress MPa |
|---|---|---|---|---|---|---|
| | | | D50 *µ*m | Amount treated kg/h | g/10min | |
| Example 1 | 16.1 | 3.9 | 59 | 26.6 | 10.6 | 30.9 |
| Example 2 | 17.0 | 4.1 | 77 | 9.8 | 10.4 | 30.1 |
| Example 3 | 17.6 | 4.6 | 81 | 11.5 | 10.1 | 30.5 |
| Example 4 | 18.1 | 4.8 | 77 | 12.3 | 10.3 | 30.7 |
| Example 5 | 22.7 | 6.5 | 79 | 12.1 | 10.5 | 30.4 |
| Example 6 | 16.1 | 3.9 | 59 | 26.6 | 4.8 | 48.2 |
| Comparative Example 1 | 25.5 | 7.0 | 204 | 6.8 | 3.9 | 30.2 |
| Comparative Example 2 | 27.0 | 7.4 | 194 | 5.7 | 3.7 | 30.3 |

As presented in Table 1, the molding resin materials in which the pulverized products of hardwood kraft pulp of Examples were blended had MFR of more than 4.0 g/10 min and good fluidity as compared with that of Comparative Examples 1 and 2 in which the pulverized products of softwood kraft pulp of Comparative Examples were blended. In the molding resin material of Example 6 in which maleic acid-modified polypropylene was added, the maximum stress was improved. The present invention enables the production of a molding resin material that is superior in flowability and allows injection molding.

### [Example 7]

A molding resin material was produced in the same manner as in Example 1, except that powdery cellulose (product name: W-50GK, particle size: 54 µm, manufactured by NIPPON PAPER INDUSTRIES CO., LTD.) as the pulp pulverized product and polybutylene succinate (trade name: ZM7B01, manufactured by Mitsubishi Chemical Corporation, melt flow rate: 47.66 g/10 min) were mixed in a ratio of 51:49. The maximum stress of this molding material was 38.0 MPa and equivalent to the maximum stress (37.4 MPa) of the molding material that was produced by setting the ratio of polybutylene succinate to 100.

## Claims

1. A molding resin material comprising 10 to 90% by mass of a pulverized product of pulp having a 50% average particle size (D50) on a volume basis measured by a laser diffraction/scattering method of 100 µm or less, and further comprising a thermoplastic resin.

2. The molding resin material according to claim 1, wherein the pulp is hardwood chemical pulp.

3. The molding resin material according to claim 1 or 2, wherein the thermoplastic resin includes a polyolefin-based resin.

4. The molding resin material according to any one of claims 1 to 3, wherein the thermoplastic resin includes a polypropylene-based resin.

5. The molding resin material according to any one of claims 1 to 4, wherein the thermoplastic resin includes a biodegradable resin.

6. The molding resin material according to claim 5, wherein the thermoplastic resin includes a polylactic acid-based resin.

7. The molding resin material according to claim 5 or 6, wherein the thermoplastic resin includes a polybutylene succinate-based resin.

8. The molding resin material according to any one of claims 1 to 7 comprising 5 to 15% by mass of a compatibilizing resin.

9. The molding resin material according to any one of claims 2 to 8, wherein the hardwood chemical pulp is chemical pulp using a Eucalyptus raw material.

10. The molding resin material according to any one of claims 2 to 9, wherein the hardwood chemical pulp has a fiber width of 10 to 25 µm and a wall thickness of 3.0 to 7.0 µm.

11. A method for producing a pulp pulverized product for a molding resin material, the method comprising a pulverization step of pulverizing pulp to obtain a pulverized product having a 50% average particle size (D50) on a volume basis measured by a laser diffraction/scattering method of 100 µm or less.

12. The method for producing a pulp pulverized product for a molding resin material according to claim 11, wherein the pulp is hardwood chemical pulp.
